# EUROPÄISCHE PATENTSCHRIFT

(11) **EP 2 026 894 B1**
(45) Veröffentlichungstag und Bekanntmachung des Hinweises auf die Patenterteilung: **14.02.2018**
(21) Anmeldenummer: 07727375.3
(22) Anmeldetag: 27.03.2007
(51) Int. Cl.: B01D 46/24, F01N 3/022

(54) **FILTEREINRICHTUNG, INSBESONDERE FÜR EIN ABGASSYSTEM EINER BRENNKRAFTMASCHINE**
FILTER DEVICE, ESPECIALLY FOR AN EXHAUST SYSTEM OF AN INTERNAL COMBUSTION ENGINE
DISPOSITIF DE FILTRAGE CONÇU EN PARTICULIER POUR UN SYSTÈME DE GAZ D'ÉCHAPPEMENT DE MOTEUR À COMBUSTION INTERNE

(30) Priorität: 23.05.2006 DE 102006024075
(43) Veröffentlichungstag der Anmeldung: 25.02.2009
(73) Patentinhaber: Robert Bosch GmbH, 70442 Stuttgart (DE)
(72) Erfinder: KOMORI, Teruo, 70378 Stuttgart (DE); HOEFFKEN, Tobias, 70192 Stuttgart (DE)
(86) Internationale Anmeldenummer: PCT/EP2007/052902
(87) Internationale Veröffentlichungsnummer: WO 2007/134898

(56) Entgegenhaltungen:
- EP-A1- 1 502 640
- WO-A-03/020407
- WO-A1-2007/134897
- WO-A2-2008/066795
- US-A- 4 417 908

## Beschreibung

### Stand der Technik

Die Erfindung betrifft ein Filterelement, insbesondere für ein Abgassystem einer Brennkraftmaschine, nach dem Oberbegriff des Anspruchs 1 sowie eine Filtereinrichtung mit einem Filterelement nach dem nebengeordneten Anspruch 3. Aus der EP 1 502 640 A1 ist ein Filterelement bekannt mit einer Eintrittsfläche und mit einer Austrittsfläche, mit einer Vielzahl von Eintrittskanälen und mit einer Vielzahl von Austrittskanälen bekannt, wobei die Eintrittskanäle einen sechseckförmigen Querschnitt und die Austrittskanäle einen quadratischen oder rautenförmigen Querschnitt aufweisen, und wobei die Eintrittskanäle und die Austrittskanäle durch eine Filterwand aus einem offenporigen Material getrennt sind.

Die Filterelemente bestehen häufig aus einem keramischen Werkstoff und werden in der Regel durch Extrudieren hergestellt. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des Filters strömt, wird ein Teil der Kanäle am hinteren Ende des Filterelements verschlossen, während ein anderer Teil der Kanäle am vorderen Ende des Filterelements verschlossen wird. Dadurch werden zwei Gruppen von Kanälen gebildet, nämlich die sogenannten Eintrittskanäle, welche am hinteren Ende verschlossen sind, und die sogenannten Austrittskanäle, welche am Anfang des Filterelements verschlossen sind.

Zwischen den Eintrittskanälen und den Austrittskanälen besteht ausschließlich über die porösen Wände des Filterelements (nachfolgend Filterwände) eine Strömungsverbindung, so dass das Abgas das Filterelement nur durchströmen kann, indem es aus den Eintrittskanälen durch die Wände des Filterelements hindurch in die Austrittskanäle strömt.

Bei dem bekannten Filterelement lagern sich mit der Zeit an der stromaufwärts gelegenen Oberfläche der Filterwand Rußpartikel ab. Diese Rußpartikel führen zu einer Verringerung der Durchlässigkeit der Filterwand und in Folge dessen zu einer Erhöhung des Druckabfalls, der beim Durchtritt des Gasstroms durch die Filterwand auftritt. Entsprechend erhöht sich der sogenannte "Abgasgegendruck". Überschreitet dieser einen bestimmten Wert, wird der Filter regeneriert, indem die abgeschiedenen Rußpartikel verbrannt werden. Dabei wird Wärme freigesetzt, was zu einer Temperaturerhöhung im Filterelement führt.

Je größer die Filterfläche des Wabenkörpers ist, desto längere Regenerationsintervalle werden möglich. Wabenkörper mit hoher Zelldichte, das heißt mit kleinen Kanaldurchmessern, weisen eine hohe volumenspezifische Filterfläche auf. Allerdings dürfen die Kanäle auf der Eintrittsseite nicht zu klein werden, da sonst eine Verblockung der Kanäle durch Asche- oder Rußpartikel zu befürchten ist. Außerdem ist bei einem zu hohen Anteil des durch die Durchströmung der Filterkanäle verursachten Druckverlustes am Gesamtdruckverlust des Filters eine ungleichmäßige Beladung zu befürchten. Dies ist insbesondere dann ungünstig, wenn dieser hohe Anteil durch die Kanäle auf der Abströmseite des Filters verursacht werden, da in diesem Fall die Strömung im hinteren Bereich des Filters durch die Filterwand tritt und dort ein größerer Teil des Rußes abgeschieden wird. In diesem Teil des Filters treten bei der Regeneration ohnehin die höchsten Temperaturen auf. Dieser Effekt wird durch eine große eingelagerte Rußmenge noch verstärkt. Diese Gefahr ist vor allem bei Filterelementen aus Cordierit gegeben, da Cordierit eine vergleichsweise geringe spezifische Wärmekapazität hat und deshalb bei der Oxidation von Rußablagerungen lokal sehr hohe Temperaturen auftreten können. In Folge dessen können unter ungünstigen Umständen bei der Regeneration so hohe Temperaturen innerhalb des Filterelements auftreten, dass die thermische Stabilität des Cordierits nicht mehr gewährleistet ist. Dieser Zusammenhang hat bisher den Einsatz von Filterelementen aus Cordierit in Personenkraftwagen verhindert.

### Offenbarung der Erfindung

Aufgabe der vorliegenden Erfindung ist es, die Temperaturbelastungen in der stromabwärts gelegenen zweiten Hälfte des Filterelements zu reduzieren.

Diese Aufgabe wird erfindungsgemäß durch ein Filterelement gemäß Anspruch 1 gelöst.

Dadurch wird der Rundheitsparameter der Eintrittskanäle reduziert, was sich positiv auf die Verteilung der Druckverluste innerhalb des Filterelements auf die Eintrittskanäle, die Filterwände und die Austrittskanäle auswirkt.

Besonders bevorzugt ist es, wenn in der ersten Hälfte mindestens 5 %, bevorzugt mindestens 10 % mehr Ruß und besonders bevorzugt mindestens 15 % mehr Ruß abgelagert wird.

Die erhöhte Rußablagerung in der ersten Hälfte des Filterelements führt dazu, dass bei der Regeneration des Filterelements in der ersten Hälfte des Filterelements eine größere Wärme freigesetzt wird und in etwa gleichem Umfang die Wärmefreisetzung in der zweiten Hälfte des Filterelements reduziert wird. Da jedoch die zweite Hälfte des Filterelements während des Normabetriebs ohnehin thermisch höher belastet ist, werden durch die ungleiche Wärmefreisetzung bei der Regeneration des Filterelements die in der zweiten Hälfte des Filterelements auftretenden Temperaturspitzen reduziert und die in der ersten Hälfte des Filterelements auftretenden Temperaturspitzen nach wie vor nicht höher als die in der zweiten Hälfte des Filterelements auftretenden Temperaturspitzen. Dadurch werden unzulässig hohe Temperaturen in der zweiten Hälfte des Filterelements vermieden, ohne dass es in der ersten Hälfte des Filterelements zum Auftreten unzulässig hoher Temperaturen kommt. Im Ergebnis werden somit Betriebssicherheit und Lebensdauer des Filterelements erhöht.

Die Rußverteilung innerhalb eines Filterelements kann durch Beladen, Wiegen, Zersägen, Ausbrennen und erneutes Wiegen des Filterelements überprüft werden. Dabei hat es sich als vorteilhaft erwiesen, wenn das Beladen des Filters an einem Motorprüfstand bei dem im Folgenden spezifizierten Betriebspunkt stattfinden: Die Abgastemperatur an der Eintrittsfläche des Filterelements soll zwischen 200° Celsius und 300° Celsius betragen. Die NOx-Konzentration soll kleiner 200 ppm sein. Der Abgasvolumenstrom soll zwischen 200 m³/h und 350 m³/h betragen. Der Rußmassenstrom soll zwischen 2 g/h und 5 g/h betragen. Die Gesamtrußbeladung sollte zwischen 6 und 7 g Ruß pro Liter Filterelementvolumen liegen. Die Gesamtrußbeladung kann durch Wiegen des Filterelements vor dem Beladen und nach dem Beladen einfach festgestellt werden.

Wenn nach dem Beladen das Filterelement aus dem Gehäuse entfernt wird, darf sich das Gesamtgewicht von Filter, Gehäuse und eventuell vorhandenem Wärmedämmmaterial nicht ändern und es muss selbstverständlich dafür Sorge getragen werden, dass kein Ruß aus dem Filterelement entfernt wird.

Nachdem das Filterelement aus dem Gehäuse entfernt wurde, wird es gewogen und in einer Ebene, die parallel zu der Eintrittsfläche und der Austrittsfläche verläuft, in der Mitte zwischen diesen beiden Flächen in eine erste stromaufwärts gelegene Hälfte und in eine zweite stromabwärts gelegene Hälfte zerteilt. Die erste und die zweite Hälfte des Filterelements werden gewogen. Dabei darf die Summe der Gewichte von erster Hälfte und zweiter Hälfte das Gewicht des ungeteilten Filterelements nicht um mehr als 0,1 % des Filterelements unterschreiten. Andernfalls steht zu befürchten, dass die Messung mit einer zu hohen Ungenauigkeit behaftet ist oder ein sonstiger Fehler aufgetreten ist.

Anschließend werden die erste Hälfte und die zweite Hälfte des Filterelements in einem Ofen unter Luft bei einer Temperatur von mindestens 700° Celsius für mindestens eine Stunde ausgeheizt. Dabei findet die Regeneration der beiden Hälften des Filterelements statt und der Ruß wird verbrannt. Das Verbrennen des in dem Filterelement abgelagerten Rußes führt zu einer Reduktion des Gewichts sowohl der ersten Hälfte des Filterelements als auch der zweiten Hälfte des Filterelements.

Bei erfindungsgemäßen Filterelementen ist die Reduktion des Gewichts der ersten stromaufwärts gelegenen Filterhälfte größer als jene der stromabwärts gelegenen zweiten Filterhälfte.

Die Grundstruktur des Filterelements 18 kann eine Zelldichte von 200 cpsi (cpsi = cells per square inch) bis 450 cpsi, bevorzugt von 300 bis 350 cpsi, besitzen.

Eine Wandstärke Wₛ der Filterwände kann 0,1 mm bis 1,2 mm, bevorzugt 0,25 mm bis 0,50 mm, betragen.

Die Porosität des Filtermaterials kann in einem Bereich zwischen 30 % und 70 % liegen, und die mittlere Porengröße des Filtermaterials kann in einem Bereich zwischen 5 Mikrometern und 30 Mikrometern liegen.

Der Anteil der Poren, deren Durchmesser mindestens zweimal so groß wie die mittlere Porengröße ist, beträgt höchstens 30% des Volumens aller Poren.

Die auf das gesamte Volumen der Filterwände bezogene Wärmekapazität kann mindestens 400 Joule/Liter Kelvin [J/IK], bevorzugt zwischen 500 J/IK und 560 J/IK, betragen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarte Merkmale können sowohl einzeln als auch in beliebiger Kombination miteinander erfindungswesentlich sein.

### Kurze Beschreibung der Zeichnungen

Es zeigen:
Figur 1 eine schematische Darstellung einer Brennkraftmaschine mit einer erfindungsgemäßen Abgasnachbehandlungseinrichtung;
Figur 2 ein erfindungsgemäßes Filterelement im Längsschnitt,
Figur 3 einen Querschnitt durch ein Filterelement (nicht Teil der Erfindung),
Figur 4 einen Querschnitt durch ein Ausführungsbeispiel eines erfindungsgemäßen Filterelements,
Figur 5 Druckverlauf und Filtrationsgeschwindigkeit bei Filterelementen nach dem Stand der Technik und
Figur 6 Druckverlauf und Filtrationsgeschwindigkeit bei erfindungsgemäßen Filterelementen.

### Ausführungsformen der Erfindung

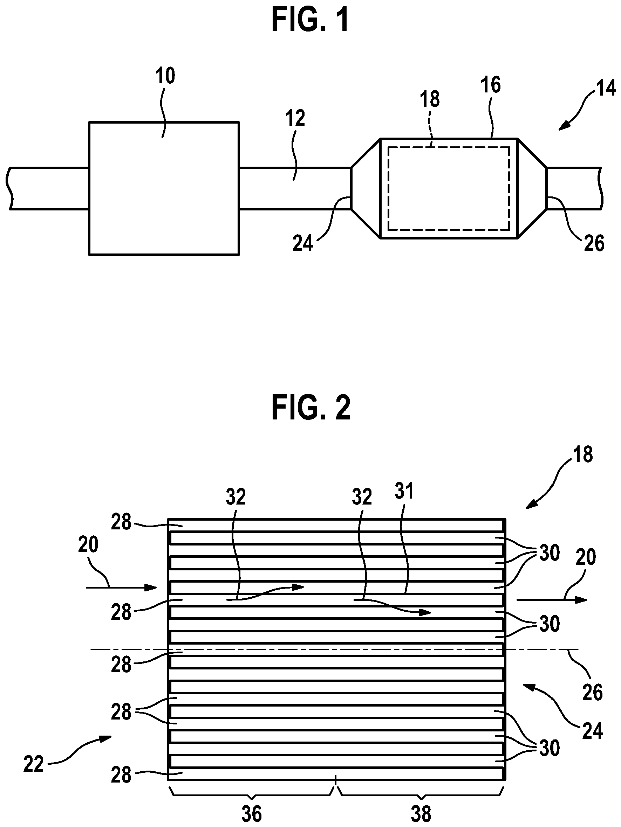

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei Diesel-Brennkraftmaschinen erforderlich, um gesetzliche Bestimmungen einzuhalten.

Die Filtereinrichtung 14 umfasst ein zylindrisches Gehäuse 16, in dem ein im vorliegenden Ausführungsbeispiel rotationssymmetrisches, insgesamt ebenfalls zylindrisches Filterelement 18 angeordnet ist.

In Figur 2 ist ein Querschnitt durch ein erfindungsgemäßes Filterelement 18 dargestellt. Das Filterelement 18 kann beispielsweise ist als extrudierter Formkörper aus einem keramischen Material, wie zum Beispiel Cordierit, hergestellt werden.

Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand 31 in einen der Austrittskanäle 30. Exemplarisch ist dies durch Pfeile 32 dargestellt.

Eine erste Hälfte 36 des Filterelements 18 erstreckt sich von der Eintrittsfläche 22 bis zur Mitte des Filterelements 18, während sich eine zweite Hälfte 38 des Filterelements 18 von der Mitte bis zur Austrittsfläche 24 des Filterelements 18 erstreckt.

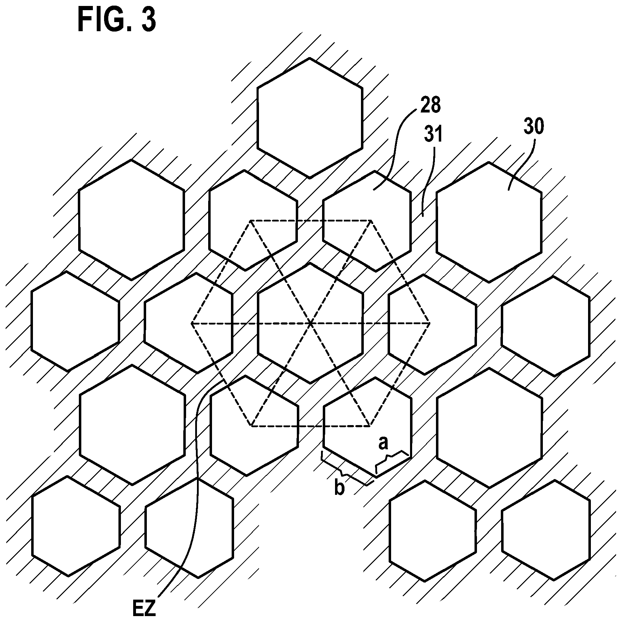

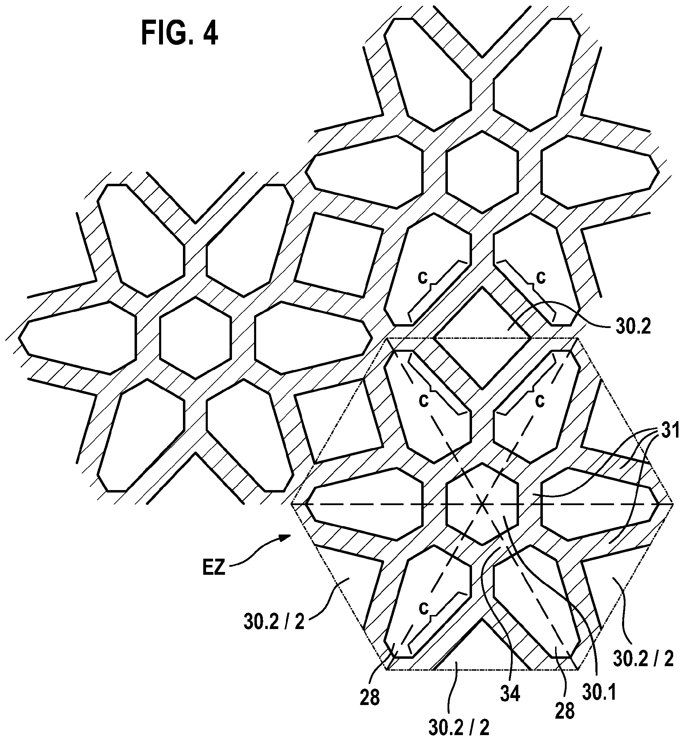

Das Filterelement 18 ist ein prismatischer Körper, dessen Querschnitt aus einer sich regelmäßig wiederholenden Folge von Eintrittskanälen und Austrittskanälen zusammensetzt. Diese sich regelmäßig wiederholenden Folge von Eintrittskanälen und Austrittskanälen kann in vielen Fällen durch Spiegelung, Rotation und/oder Translation einer sogenannten Einheitszelle erzeugt werden. In anderen Worten: Die gesamte Querschnittsgeometrie des Filterelements lässt sich aus mehreren Einheitszellen zusammensetzen. Bei den Ausführungsbeispielen gemäß der Figuren 3 und 4 sind die Einheitszellen sechseckig. Die Einheitszellen können beispielsweise auch quadratisch, rechteckig oder rautenförmig sein. Allerdings ist die Erfindung nicht auf Querschnittsgeometrien beschränkt, die sich auf Einheitszellen zurückführen lassen.

In Figur 3 ist ein Ausschnitt durch einen Querschnitt eines Ausführungsbeispiels eines Filterelements 18 (nicht Teil der Erfindung) stark vergrößert dargestellt. Der Querschnitt des Filterelements 18 setzt sich jeweils aus einem Austrittskanal 30, der im Querschnitt die Form eines gleichseitigen Sechsecks aufweist, und insgesamt sechs, den Austrittskanal 30 umgebenden Eintrittskanälen 28 zusammen. Aus Gründen der Übersichtlichkeit sind nicht alle Eintrittskanäle 28 und nicht alle Austrittskanäle 30 mit Bezugszeichen versehen.

Die Eintrittskanäle 28 weisen ebenfalls einen sechseckigen Querschnitt auf, allerdings sind nicht alle sechs Seiten dieses Sechsecks gleich lang. Es gibt vielmehr erste Seiten a und zweite Seiten b, die sich abwechseln. Durch die verschieden langen Seiten a, b der Eintrittskanäle 28 wird der Rundheitsparameter *fₑᵢₙ* der Eintrittskanäle 28 gegenüber dem Rundheitsparameter *fₐᵤₛ* der Austrittskanäle 30 reduziert. Im Ergebnis führt dies dazu, dass der Strömungswiderstand der Eintrittskanäle 28 größer ist als der Strömungswiderstand der Austrittskanäle 30, so dass sich die gewünschte gleichmäßige Rußbeladung des Filterelements 18 einstellt.

Bei dem Ausführungsbeispiel gemäß Figur 3 ist außerdem das Verhältnis zwischen der Zahl *nₑᵢₙ* der Eintrittskanäle 28 und der Zahl *nₐᵤₛ* der Austrittskanäle gleich 2:1. Auch dadurch, dass es mehr Eintrittskanäle 28 als Austrittskanäle 30 gibt, wird die gleichmäßige Beladung des Filterelements 18 mit Ruß gefördert.

Man kann sich den Querschnitt des Filterelements 18 gemäß Figur 3 auch durch das Zusammensetzen mehrerer sechseckiger Einheitszellen EZ vorstellen. Diese sechseckigen Einheitszellen EZ sind wiederum aus insgesamt sechs spiegelsymmetrischen Dreiecken 34 zusammengesetzt.

In Figur 4 ist ein Ausführungsbeispiel eines erfindungsgemäßen Filterelements im Querschnitt dargestellt. In Figur 4 sind insgesamt drei Einheitszellen EZ aneinandergefügt. Es versteht sich von selbst, dass durch das Aneinanderfügen weiterer Einheitszellen EZ beliebig große Filterelementquerschnitte realisiert werden können. In der Mitte der Einheitszelle EZ ist ein zentraler Austrittskanal 30.1 angeordnet, der bei dem Ausführungsbeispiel gemäß Figur 4 im Querschnitt die Form eines regelmäßigen Sechsecks aufweist.

Um den zentralen Austrittskanal 30.1 sind insgesamt sechs Eintrittskanäle 28 angeordnet. Diese Eintrittskanäle 28, von denen nicht alle mit Bezugszeichen versehen wurden, haben im Querschnitt die Form eines spiegelsymmetrischen Siebenecks.

Die längsten Seiten dieses Siebenecks sind in Figur 4 mit dem Buchstaben c bezeichnet. Jeweils vier Eintrittskanäle 28 umschließen mit ihren Seiten c jeweils einen äußeren Austrittskanal 30.2. Diese äußeren Austrittskanäle 30.2 erstrecken sich über zwei Einheitszellen EZ hinweg. In der in Figur 4 durch eine strichpunktierte Linie dargestellten Einheitszelle EZ sind an den Seiten der Einheitszelle, an der keine weitere Einheitszelle anschließt infolgedessen nur jeweils ein halber äußerer Austrittskanal 30.2 dargestellt. Dieser Sachverhalt ist durch das Bezugszeichen 30.2 / 2 angedeutet.

Die erfindungsgemäßen Filterelemente 18 können durch Extrudieren eines keramischen oder eines glaskeramischen Werkstoffs, insbesondere aus Cordierit, Aluminiumtitanat oder Siliziumkarbid, hergestellt werden. Alternativ kann das Filterelement 18 auch aus Sintermetall hergestellt werden.

In vielen Anwendungsfällen hat es sich als vorteilhaft erwiesen, wenn mindestens die stromaufwärts gelegene Oberfläche der Filterwand 31 eine katalytische Beschichtung aufweist.

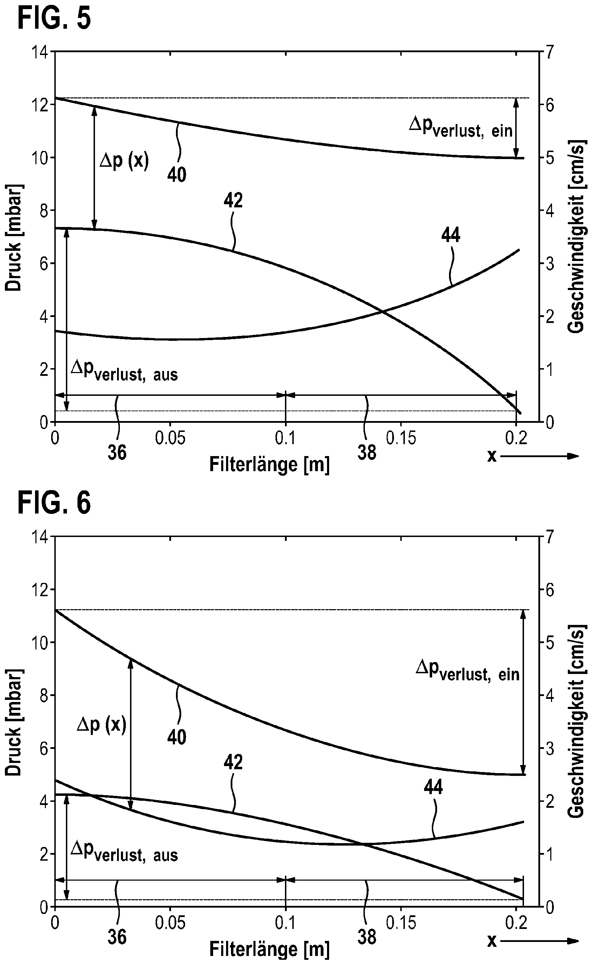

In Figur 5 ist ein Diagramm dargestellt, welches die Strömungsverhältnisse innerhalb eines aus dem Stand der Technik bekannten Filterelements und die daraus resultierende Verteilung der Rußablagerung innerhalb des Filterelements veranschaulichen. Bei dem Filterelement nach dem Stand der Technik gemäß Figur 5 weisen die Eintrittskanäle 28 einen großen Strömungsquerschnitt auf, während die Austrittskanäle 30 einen demgegenüber kleineren Querschnitt aufweisen.

Die Eintrittsfläche 22 des Filterelements 18 entspricht einer Filterlänge von 0 m, während die Austrittsfläche 24 des Filterelements 18 einer Filterlänge von 0,2 m entspricht. Infolgedessen erstreckt sich die erste Hälfte 36 des Filterelements 18 von x = 0 bis x = 0,1 m, während sich die zweite Hälfte 38 des Filterelements 18 von x = 0,1 m bis x = 0,2 m erstreckt.

Eine erste Linie 40 zeigt den Druck in einem Eintrittskanal 28 über die Länge des Filterelements 18. Eine zweite Linie 42 zeigt den Druckverlauf innerhalb der Austrittskanäle 30. Damit das Abgas vom Eintrittskanal 28 in einen Austrittskanal 30 durch die Filterwände 31 hindurchströmt, muss der Druck in den Eintrittskanälen 28 höher sein als in den Austrittskanälen 30. In Figur 5 ist die Druckdifferenz Δp(x) durch einen Doppelpfeil zwischen den Linien 40 und 42 veranschaulicht. Die Druckdifferenz Δp(x) ist nicht konstant, sondern ist abhängig von der Koordinate "x".

Bei dem Filterelement 18 gemäß Figur 5 nimmt die Druckdifferenz Δp (x) in der zweiten Hälfte des Filterelements 18 stark zu und erreicht bei der Filterlänge 0,2 m einen Wert von etwas weniger als 10 mbar.

Je größer die Druckdifferenz zwischen Eintrittskanälen 28 und Austrittskanälen 30 ist, desto mehr Abgase strömen durch die Filterwände 31. Da die durch die Filterwände strömende Abgasmenge proportional zur in den Filterwänden 31 abgelagerten Rußmenge ist, kann die Strömungsgeschwindigkeit, mit der das Abgas vom Eintrittskanal 28 in einen benachbarten Austrittskanal 30 strömt, als Maß für die an dieser Stelle in der Filterwand 31 abgelagerte Rußmenge herangezogen werden.

Mit einer dritten Linie 44 ist die Strömungsgeschwindigkeit des Abgases beim Durchtritt vom Eintrittskanal 28 in einen Austrittskanal 20, das heißt in der Filterwand 31, dargestellt. Dabei ist, wie sich aus Figur 5 ergibt, die Strömungsgeschwindigkeit in der zweiten Hälfte 38 des Filterelements 18 größer als in der ersten Hälfte 36 des Filterelements 18 und erreicht an der Austrittsfläche 24 des Filterelements 18 (x = 0,2 m) ihr Maximum von etwa 3,2 cm/s.

Diese Strömungsverhältnisse und die daraus resultierende Verteilung der Rußablagerung in diesem Filterelement 18 sind ungünstig, da sich in der zweiten Hälfte 38 des Filterelements 18 mehr Ruß ablagert als in der ersten Hälfte 36 des Filterelements 18.

Bei dem Ausführungsbeispiel eines erfindungsgemäßen Filterelements 18, dessen Querschnitt beispielsweise gemäß der Figur 4 ausgebildet sein kann, gibt es eine Vielzahl von Eintrittskanälen 28, die einen kleinen Querschnitt aufweisen. Gleichzeitig ist die Zahl der Eintrittskanäle 28 bei diesem Filterelement 18 größer als die Zahl der Austrittskanäle 30. Wegen der relativ kleinen Querschnitte der Eintrittskanäle 28 ist der Druckverlust Δp_{verlust, ein} innerhalb der Eintrittskanäle 28 über die Länge des Filterelements 18 größer als bei dem Filterelement nach dem Stand der Technik gemäß Figur 5. Bei dem Filterelement gemäß Figur 5 beträgt der Druckverlust Δp_{verlust, ein} in den Eintrittskanälen etwa 2,3 mbar. Bei dem Ausführungsbeispiel eines erfindungsgemäßen Filterelements 18 gemäß Figur 6 beträgt der Druckverlust Δp_{verlust, ein} in den Eintrittskanälen 28 etwa 6 mbar. Demgegenüber ist der Druckverlust Δp_{verlust, aus} in den Austrittskanälen 30 bei dem Ausführungsbeispiel eines erfindungsgemäßen Filterelements 18 gemäß Figur 6 kleiner als bei dem Filterelement 18 nach dem Stand der Technik, dessen Strömungsverhältnisse in Figur 5 dargestellt sind. Bei dem erfindungsgemäßen Filterelement 18 beträgt der Druckverlust Δp_{verlust, aus} in den Austrittskanälen etwa 4 mbar.

Die Summe der Druckverluste (Δp_{verlust, ein} + Δp_{verlust, aus}) in den Eintrittskanälen 28 und den Austrittskanälen 30 ist bei dem Filterelement 18 nach dem Stand der Technik (siehe Figur 5) etwa gleich groß wie die Summe der Druckverluste (Δp_{verlust, ein} + Δp_{verlust, aus}) bei einem erfindungsgemäßen Filterelement 18 (siehe Figur 6).

Bei dem erfindungsgemäßen Filterelement 18 ergeben sich Strömungsgeschwindigkeiten des Abgases von den Eintrittskanälen 28 in die Austrittskanäle 30, die ihr Maximum am Anfang des Filterelements 18, das heißt an der Eintrittsfläche 22 haben. Der zugehörige Wert der Strömungsgeschwindigkeit beträgt etwa 2,1 m/s. Die Strömungsgeschwindigkeit am Ende des Filterelements (x = 0,2 m) beträgt demgegenüber nur etwa 1,6 m/s. Dies bedeutet, dass sich in der ersten Hälfte des erfindungsgemäßen Filterelements mehr Ruß ablagert als in der zweiten Hälfte des Filterelements 18. Daraus ergibt sich der Vorteil, dass die durch die Regeneration des Rußes verursachte Temperaturerhöhung in der ersten Hälfte des Filterelements 18 größer ist als in der zweiten Hälfte des Filterelements 18. Da jedoch diese Temperaturerhöhungen dem normalen Temperaturprofil des Filterelements 18 während des Betriebs der Brennkraftmaschine überlagert werden und im Normalbetrieb des Filterelements 18 die erste Hälfte 36 eine niedrigere Temperatur aufweist als die zweite Hälfte 38 des Filterelements 18, werden die bei der Regeneration des Filterelements 18 in der zweiten Hälfte auftretenden Maximaltemperaturen reduziert, so dass temperaturbedingte Schäden des Filterelements 18 ausgeschlossen werden können. Die bei der Regeneration eines erfindungsgemäßen Filterelements 18 in der ersten Hälfte 36 auftretenden Temperaturen nehmen zwar leicht zu, sind jedoch auf keinen Fall höher als die in der zweiten Hälfte 38 des Filterelements 18 auftretenden Temperaturen. Dadurch ist insgesamt eine bessere Temperaturverteilung gewährleistet und die Gefahr von thermisch bedingten Schäden des Filterelements wird signifikant reduziert.

## Patentansprüche

1. Filterelement, insbesondere zur Filterung von Abgasen einer Dieselbrennkraftmaschine, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28) und die Austrittskanäle (30) durch Filterwände (31) aus einem offenporigen Material getrennt sind, wobei der Querschnitt des Filterelements (18) durch Aneinanderfügen mehrerer sechseckiger Einheitszellen (EZ) gebildet wird, wobei im Mittelpunkt jeder Einheitszelle (EZ) ein zentraler Austrittskanal (30.1) angeordnet ist, wobei der zentrale Austrittskanal (30.1) von sechs Eintrittskanälen (28) umgeben ist, dass die Eintrittskanäle (28) im Querschnitt die Form eines spiegelsymmetrischen Polygons aufweisen, und dass jeweils vier benachbart zueinander angeordnete Eintrittskanäle (28) einen äußeren Austrittskanal (30.2) umschließen, und wobei die Zahl der Eintrittskanäle (28) größer als die Zahl der Austrittskanäle (30) ist, so dass das Filterelement (18) in einer ersten Hälfte (36), die sich an die Eintrittsfläche (22) anschließt, mehr Ruß ablagert als in einer zweiten Hälfte (38) des Filterelements (18), die an der Austrittsfläche (24) endet.

2. Filterelement nach Anspruch 1, **dadurch gekennzeichnet, dass** das Filterelement (18) in der ersten Hälfte (36) mindestens 5%, bevorzugt mindestens 10% mehr Ruß, und besonders bevorzugt mindestens 15% mehr Ruß, ablagert als in der zweiten Hälfte (38) des Filterelements (18).

3. Filtereinrichtung mit einem Filterelement (18), mit einem Gehäuse (16) und mit einem Abgasrohr (12), **dadurch gekennzeichnet, dass** das Filterelement ein Filterelement nach einem der vorhergehenden Ansprüche ist.

## Claims

1. Filter element, in particular for filtering exhaust gases of a diesel internal combustion engine, having an inlet surface (22) and an outlet surface (24), having a multiplicity of inlet ducts (28), and having a multiplicity of outlet ducts (30), wherein the inlet ducts (28) and the outlet ducts (30) are separated by filter walls (31) composed of an open-pore material, wherein the cross section of the filter element (18) is formed by joining together multiple hexagonal unit cells (EZ), wherein a central outlet duct (30.1) is arranged in the central point of each unit cell (EZ), wherein the central outlet duct (30.1) is surrounded by six inlet ducts (28), in that the inlet ducts (28) have, in the cross section, the shape of a mirror-symmetrical polygon, and in that in each case four inlet ducts (28) arranged adjacent to one another surround an outer outlet duct (30.2), and wherein the number of inlet ducts (28) is greater than the number of outlet ducts (30), such that the filter element (18) stores more soot in a first half (36), which adjoins the inlet surface (22), than in a second half (38), which ends at the outlet surface (24), of the filter element (18).

2. Filter element according to Claim 1, **characterized in that** the filter element (18) stores at least 5%, preferably at least 10% more soot, and particularly preferably at least 15% more soot, in the first half (36) than in the second half (38) of the filter element (18) .

3. Filter device having a filter element (18), having a housing (16) and having an exhaust pipe (12), **characterized in that** the filter element is a filter element according to one of the preceding claims.

## Revendications

1. Élément de filtre, en particulier pour filtrer des gaz d'échappement d'un moteur diesel à combustion interne comprenant une surface d'entrée (22) et une surface de sortie (24), une pluralité de canaux d'entrée (28) et une pluralité de canaux de sortie (30), les canaux d'entrée (28) et les canaux de sortie (30) étant séparés par des parois de filtre (31) en un matériau à pores ouverts, la section transversale de l'élément de filtre (18) étant formée en assemblant les unes aux autres plusieurs cellules unitaires hexagonales (EZ), au centre de chaque cellule unitaire (EZ) étant disposé un canal de sortie central (30.1), le canal de sortie central (30.1) étant entouré par six canaux d'entrée (28), que les canaux d'entrée (28) présentent en section transversale la forme d'un polygone à symétrie spéculaire et qu'à chaque fois quatre canaux d'entrée (28) disposés de manière adjacente les uns aux autres entourent un canal de sortie extérieur (30.2), et le nombre des canaux d'entrée (28) étant supérieur au nombre des canaux de sortie (30) de telle sorte que l'élément de filtre (18), dans une première moitié (36) qui se raccorde à la surface d'entrée (22), accumule plus de suie que dans une deuxième moitié (38) de l'élément de filtre (18) qui se termine au niveau de la surface de sortie (24).

2. Élément de filtre selon la revendication 1, **caractérisé en ce que** l'élément de filtre (18) accumule dans la première moitié (36), au moins 5 %, de préférence au moins 10 % plus de suie, et particulièrement préférablement au moins 15 % plus de suie que dans la deuxième moitié (38) de l'élément de filtre (18).

3. Dispositif de filtrage comprenant un élément de filtre (18) avec un boîtier (16) et un tuyau d'échappement (12), **caractérisé en ce que** l'élément de filtre est un élément de filtre selon l'une quelconque des revendications précédentes.
